# FASCICULE DE BREVET EUROPEEN

(11) **EP 2 693 585 B1**
(45) Date de publication et mention de la délivrance du brevet: **13.05.2015**
(21) Numéro de dépôt: 13178989.3
(22) Date de dépôt: 01.08.2013
(51) Int. Cl.: H02H 1/00, H02H 3/08, H02H 7/22, H02H 7/26

(54) **Système de protection d'une pluralité de départs électriques contre des courts-circuits, et installation électrique comprenant un tel système de protection**
Schutzsystem für eine Vielzahl von elektrischen Ableitungen gegen Kurzschlüsse, und Elektroanlage, die ein solches Schutzsystem umfasst
System for protecting a plurality of electrical outlets against short circuits, and electrical facility comprising such a protective system

(30) Priorité: 02.08.2012 FR 1257520
(43) Date de publication de la demande: 05.02.2014
(73) Titulaire: Schneider Electric Industries SAS, 92500 Rueil-Malmaison (FR)
(72) Inventeur: Blondel, Charles, 38000 Grenoble (FR)
(74) Mandataire: Myon, Gérard Jean-Pierre

(56) Documents cités:
- EP-A1- 1 225 673
- EP-A2- 0 957 556
- FR-A1- 2 897 208
- US-B1- 6 369 995

## Description

La présente invention concerne un système de protection d'une pluralité de départs électriques contre des courts-circuits. Le système de protection comprend un disjoncteur électrique associé à une liaison électrique principale, la liaison électrique principale étant connectée électriquement à chacun des départs électriques, le disjoncteur électrique étant propre, en cas de réception d'un signal de déclenchement, à ouvrir la liaison électrique principale, les départs électriques n'étant pas électriquement alimentés lorsque la liaison électrique principale est ouverte.

L'invention concerne également une installation électrique comprenant une pluralité de départs électriques, une liaison électrique principale connectée électriquement à chacun des départs électriques, et un tel système de protection de la pluralité de départs électriques contre des courts-circuits.

On connaît du document FR 2 897 208 A1 une installation électrique comprenant une liaison électrique principale connectée à une pluralité de départs électriques et un système de protection de la pluralité de départs électriques contre des courts-circuits. Le système de protection comprend un disjoncteur différentiel principal connecté à la liaison électrique principale et des appareils de départ, chacun étant connecté à un départ électrique respectif. Chaque appareil de départ comporte un moyen de détection d'une surcharge électrique, et un circuit de coupure du disjoncteur différentiel principal comporte des moyens magnétiques de détection d'un court-circuit.

Lors de l'apparition d'un défaut de court-circuit, les moyens magnétiques de détection détectent le défaut et commandent l'ouverture des interrupteurs du disjoncteur différentiel principal.

Toutefois, la protection contre les cours-circuits dans une telle installation électrique n'est pas optimale, et le choix du calibre des moyens magnétiques de détection est parfois délicat.

Le document EP 1 225 673 A1 divulgue également un dispositif de distribution électrique de ce type et reflète le préambule de la revendication 1.

Le but de l'invention est donc de proposer un système de protection contre les courts-circuits permettant d'offrir une meilleure protection des différents départs électriques contre les courts-circuits.

A cet effet, l'invention a pour objet un système de protection du type précité, **caractérisé en ce qu'il** comprend en outre une pluralité d'organes de détection de courts-circuits, chaque organe de détection de courts-circuits étant associé à un ou plusieurs départs électriques, et en ce que les organes de détection sont reliés au disjoncteur électrique par une liaison de données et propres à envoyer, via la liaison de données, le signal de déclenchement au disjoncteur électrique en cas de détection d'un court-circuit,
- le système comprend en outre un appareil de commutation électrique pour chaque départ électrique, chaque appareil de commutation électrique étant commandable dans une position parmi une position d'ouverture et une position de fermeture, la position d'ouverture correspondant à l'absence de circulation d'un courant électrique dans le départ électrique respectif et la position de fermeture correspondant à la circulation du courant dans ledit départ ;
- la liaison de données est propre à transmettre à la fois le signal de déclenchement à destination du disjoncteur électrique
et un signal de commande à destination de l'appareil de commutation.

Suivant d'autres aspects avantageux de l'invention, le système de protection comprend une ou plusieurs des caractéristiques suivantes, prises isolément ou suivant toutes les combinaisons techniquement possibles:
- le nombre d'organes de détection de courts-circuits est égal au nombre de départs électriques, chaque organe de détection de courts-circuits étant associé à un départ électrique respectif;
   - le signal de déclenchement présente une première valeur d'intensité du courant, et le signal de commande présente une intensité de valeur comprise entre une deuxième valeur et une troisième valeur, la première valeur d'intensité étant distincte de l'intervalle de valeurs comprises entre la deuxième valeur et la troisième valeur ;
   - la première valeur d'intensité est sensiblement nulle ;
   - pour chaque départ électrique, l'appareil de commutation et l'organe de détection sont disposés dans un même boitier de protection ;
   - la liaison de données est propre à transmettre le signal de déclenchement à destination du disjoncteur et le système de protection comprend en outre un dispositif de commande des appareils de commutation, relié à chacun des appareils de commutation, et une liaison de commande propre à transmettre un signal de commande à destination de l'appareil de commutation, la liaison de commande étant distincte de la liaison de données et reliant le dispositif de commande à chaque appareil de commutation ;
   - la liaison de données est en forme d'une liaison chaînée, et comporte une pluralité de câbles de données, deux organes de détection successifs étant reliés entre eux par un câble de données correspondant et les premier et dernier organes de détection étant chacun reliés au disjoncteur électrique par un câble de données correspondant ; et
   - la liaison de données est en forme d'une liaison en étoile, et comporte une pluralité de câbles de données, chaque organe de détection étant relié au disjoncteur électrique par un câble de données correspondant.

L'invention a également pour objet une installation électrique comprenant une pluralité de départs électriques, une liaison électrique principale connectée électriquement à chacun des départs électriques, et un système de protection de la pluralité des départs électriques contre des courts-circuits, **caractérisée en ce que** le système de protection est tel que défini ci-dessus, le disjoncteur électrique étant connecté à la liaison électrique principale et chaque organe de détection étant connecté à un ou plusieurs départs électriques correspondants.

Suivant un autre aspect avantageux de l'invention, la liaison électrique principale est une liaison triphasée, et les départs électriques sont des départs triphasés, la liaison électrique principale et les départs électriques comportant chacun trois conducteurs électriques.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'une installation électrique selon un premier mode de réalisation de l'invention, l'installation électrique comprenant un disjoncteur électrique, une pluralité d'organes de détection de courts-circuits et une pluralité d'appareils de commutation électriques,
- la figure 2 est une vue détaillée d'un des organes de détection et d'un des appareils de commutation de la figure 1,
- la figure 3 est une vue analogue à celle de la figure 1 selon un deuxième mode de réalisation de l'invention,
- la figure 4 est une courbe représentant un signal de déclenchement du disjoncteur et un signal de commande de l'appareil de commutation, propres à être transmis sur une même liaison de données reliant le disjoncteur électrique à l'organe de détection,
- la figure 5 est une vue analogue à celle de la figure 1 selon un troisième mode de réalisation de l'invention, et
- la figure 6 est une vue analogue à celle de la figure 4 selon le troisième mode de réalisation de l'invention.

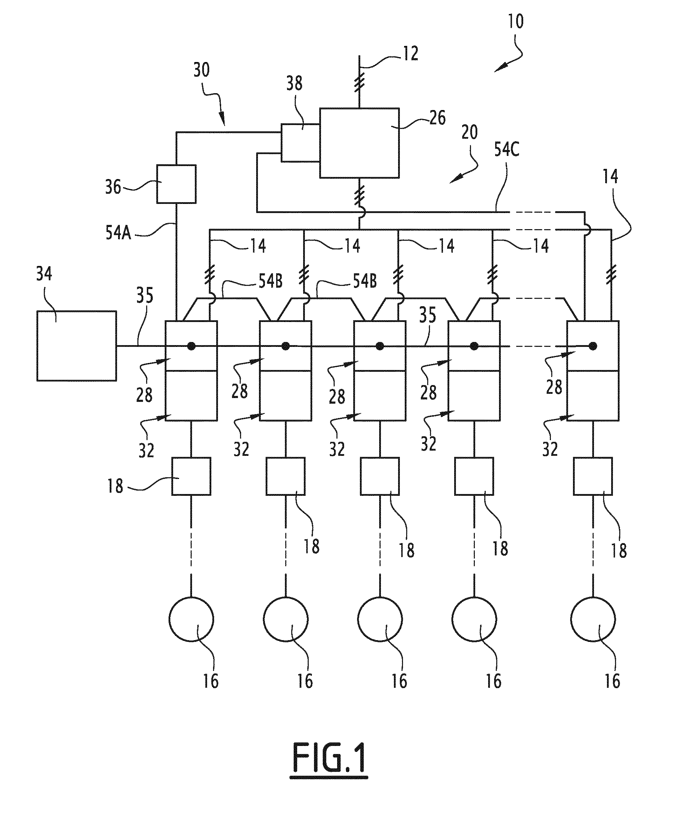

Sur la figure 1, une installation électrique 10 comprend une liaison électrique principale 12 destinée à être reliée à un réseau électrique, non représenté, et une pluralité de départs électriques 14 propres à alimenter différentes charges électriques 16, la liaison électrique principale 12 étant connectée électriquement à chacun des départs 14.

L'installation électrique 10 comprend également des disjoncteurs thermiques 18, chacun étant connecté à un départ électrique 14 respectif, et un système 20 de protection de la pluralité de départs électriques 14 contre des courts-circuits.

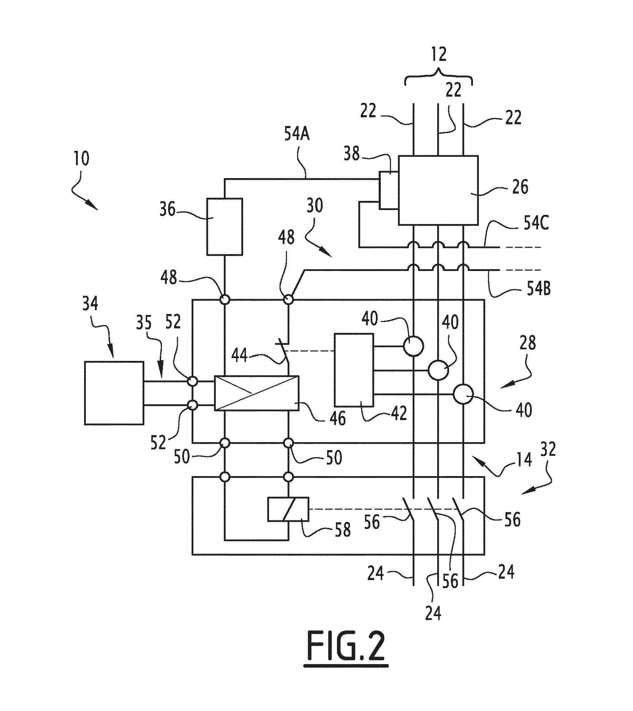

La liaison électrique principale 12 est, par exemple, une liaison triphasée, et comporte alors trois conducteurs électriques principaux 22, visibles sur la figure 2.

Chaque départ électrique 14 est, par exemple, un départ triphasé, et comporte alors trois conducteurs électriques de départ 24, visibles sur la figure 2.

Les charges électriques 16 sont, par exemple, des moteurs électriques alimentés en tension triphasée.

Les disjoncteurs thermiques 18 sont connus en soi, et présentent des calibres de valeur variable. Le calibre de chaque disjoncteur thermique 18 est fonction de la charge 16 connectée au départ électrique 14 correspondant et présente, par exemple, une valeur comprise entre 10A et 100A.

Le système de protection 20 comprend un disjoncteur principal 26 connecté à la liaison électrique principale 12, et une pluralité d'organes 28 de détection de courts-circuits, chaque organe de détection de courts-circuits 28 étant connecté à un ou plusieurs départs électriques 14.

Dans l'exemple de réalisation de la figure 1, le nombre d'organes de détection de courts-circuits 28 est égal au nombre de départs électriques 14, et chaque organe de détection de courts-circuits 28 est connecté à un départ électrique 14 respectif.

Le système de protection 20 comprend, par exemple, un unique disjoncteur principal 26 pour la pluralité de départs électriques 14 et d'organes de détection 28 associés.

Le système de protection 20 comprend également une liaison de données 30, reliant les organes de détection 28 au disjoncteur électrique principal 26.

En complément, le système de protection 20 comprend un appareil de commutation électrique 32 pour chaque départ électrique 14, chaque appareil de commutation 32 étant connecté au départ 14 correspondant, et un dispositif 34 de commande des appareils de commutation relié à chacun des appareils de commutation 32 via une liaison de commande 35.

Dans l'exemple de réalisation des figures 1 et 2, le système de protection 20 comprend un générateur de tension 36 connecté à la liaison de données 30 et un comparateur de tension 38 connecté en entrée du disjoncteur principal 26.

Le disjoncteur principal 26 est propre, en cas de détection d'un signal de déclenchement, à ouvrir la liaison électrique principale 12, et les départs électriques 14 ne sont alors pas électriquement alimentés lorsque la liaison électrique principale 12 est ouverte. Le disjoncteur principal 26 est, par exemple, un disjoncteur différentiel, et est connu en soi.

Chaque organe de détection 28 comprend un capteur de courant 40 pour chaque conducteur électrique de départ 24, chaque capteur de courant 40 étant propre à mesurer l'intensité du courant circulant dans le conducteur de départ 24 correspondant. Dans l'exemple de réalisation de la figure 2, chaque organe de détection 28 comprend trois capteurs de courant 40.

Chaque organe de détection 28 comprend une unité de détection de défaut 42 reliée à chaque capteur de courant 40 et un interrupteur 44, l'interrupteur 44 étant commandé par l'unité de détection de défaut 42 et propre à ouvrir la liaison de données 30.

Chaque organe de détection 28 comprend un sélecteur 46 propre à recevoir un signal de commande de l'appareil de commutation 32 de la part du dispositif de commande 34 et à le transmettre, le cas échéant, à l'appareil de commutation 32.

Chaque organe de détection 28 comporte deux premières bornes de connexion 48 pour relier l'organe de détection 28 au disjoncteur principal 26 via la liaison de données 30, deux deuxièmes bornes de connexion 50 pour relier l'organe de détection 28 à l'appareil de commutation 32, et deux troisièmes bornes de connexion 52 pour relier l'organe de détection 28 au dispositif de commande 34.

Chaque organe de détection 28 est propre à détecter un court-circuit présent sur le départ électrique 14 correspondant, et à envoyer, via la liaison de données 30, le signal de déclenchement au disjoncteur principal 26 en cas de détection dudit court-circuit.

La liaison de données 30 est propre à transmettre le signal de déclenchement à destination du disjoncteur principal 26.

Dans l'exemple de réalisation des figures 1 et 2, la liaison de données 30 est en forme d'une liaison chaînée, et comporte une pluralité de câbles de données 54A, 54B, 54C, le disjoncteur 26 étant relié à un premier organe parmi les organes de détection 28 par un premier câble de données 54A, chaque organe de détection 28 étant relié à un organe de détection 28 suivant par un câble de données intermédiaire 54B et le dernier organe parmi les organes de détection 28 étant relié au disjoncteur principal 26 par un dernier câble de données 54C. Autrement dit, deux organes de détection 28 successifs sont reliés entre eux par un câble de données 54B correspondant, et les premier et dernier organes de détection 28 sont chacun reliés au disjoncteur principal 26 par un câble de données 54A, 54C correspondant.

Chaque appareil de commutation 32 est commandable dans une position parmi une position d'ouverture et une position de fermeture, la position d'ouverture correspondant à l'absence de circulation d'un courant électrique dans le départ électrique 14 respectif et la position de fermeture correspondant à la circulation du courant dans ledit départ 14.

L'appareil de commutation 32 est connu en soi, et comporte un contact mobile 56 pour chacun des conducteurs électriques de départ 24 et un actionneur 58 de commande du ou des contacts mobiles 56 dans une position parmi la position d'ouverture et la position de fermeture.

Le dispositif de commande 34 est propre à générer le signal de commande, à savoir un ordre de fermeture ou un ordre d'ouverture, à destination de l'appareil de commutation 32, le signal de commande étant transmis via la liaison de commande 35.

Le générateur de tension 36 est connecté entre le disjoncteur principal 26 et le premier organe de détection 28 via le premier câble de données 54A. Le générateur de tension 36 est propre à générer une tension prédéterminée U.

Le comparateur de tension 38 est connecté en entrée du disjoncteur principal 26 et est relié aux premier et dernier câbles de données 54A, 54C de la liaison de données 30. Le comparateur de tension 38 est propre à mesurer la tension entre le premier câble de données 54A et le dernier câble de données 54C, et à comparer la tension mesurée avec un seuil prédéterminé Us de valeur strictement positive, le comparateur de tension 38 est en outre propre à déclencher le disjoncteur principal 26 lorsque la tension mesurée est inférieure au seuil prédéterminé Us.

Le fonctionnement du système de protection selon l'invention va être à présent expliqué.

Chaque organe de détection de courts-circuits 28 mesure l'intensité du courant circulant dans chaque départ électrique 14 à l'aide de ses capteurs de courant 40 et, en cas de court-circuit sur le départ électrique 14 auquel il est associé, détecte ce défaut à l'aide de son unité de détection 42.

En cas de détection du défaut de court-circuit par l'unité de détection 42, celle-ci commande alors l'ouverture de l'interrupteur 44, et la liaison de données 30 est alors ouverte, de par l'ouverture de l'interrupteur 44 correspondant. La tension mesurée par le comparateur de tension 38 est alors nulle et de ce fait inférieure au seuil prédéterminé Us de valeur strictement positive, ce qui entraîne le déclenchement du disjoncteur principal 26.

La détection d'un court-circuit sur l'un des départs électriques 14 entraîne alors le déclenchement du disjoncteur principal 26, et la protection des charges 16 alimentées par les départs électriques 14 est alors assurée.

Lorsqu'aucun défaut de court-circuit n'est détecté, tous les interrupteurs 44 sont en position fermée, et la liaison de commande 35 permet alors de transmettre le signal de commande pour un appareil de commutation 32 donné, depuis le dispositif de commande 34 jusqu'à l'organe de détection 28 associé à l'appareil de commutation 32 donné.

Lorsqu'un organe de détection 28 reçoit le signal de commande de la part du dispositif de commande 34, il transmet celui-ci à l'actionneur 58 de l'appareil de commutation correspondant via les deuxièmes bornes de connexion 50.

En outre, si un des câbles de données 54A, 54B, 54C est enlevé, alors la liaison de données 30 est ouverte, et le comparateur de tension 38 détecte la tension nulle inférieure au seuil prédéterminé Us, ce qui entraîne automatiquement le déclenchement du disjoncteur 26.

Si le dispositif de commande 34 n'est plus relié aux organes de détection 28, suite par exemple à la suppression d'un fil de connexion de la liaison de commande 35 entre le dispositif de commande 34 et le premier organe de détection 28, alors aucun signal de commande n'est transmis à un appareil de commutation 32. De même, si un fil de connexion entre les deuxièmes bornes de connexion 50 et l'appareil de commutation 32 correspondant est enlevé, alors l'appareil de commutation 32 n'est pas commandé.

Ainsi, étant donné que chaque appareil de commutation 32 est par défaut en position d'ouverture, l'absence d'un fil de connexion entre le dispositif de commande 34 et l'appareil de commutation 32 entraîne l'impossibilité de commander la fermeture des contacts mobiles 56 de l'appareil de commutation correspondant, et le départ électrique 14 correspondant est alors ouvert. Autrement dit, en cas de défaut de connexion entre le dispositif de commande 34 et un appareil de commutation 32 correspondant, la protection du départ électrique 14 correspondant est assurée, et aucun défaut ne peut apparaître sur ce départ électrique 14.

On conçoit ainsi que le système de protection 20 selon l'invention permet d'offrir une meilleure protection des différents départs électriques 14 contre des courts-circuits.

En outre, la protection des départs électriques 14 reste assurée même si un des câbles de données 54 est enlevé, puisque le disjoncteur principal 26 est dans ce cas déclenché automatiquement.

De même, la protection des départs électriques 14 demeure assurée bien qu'un fil de connexion entre le dispositif de commande 34 et un appareil de commutation 32 correspondant soit absent, étant donné que ledit appareil de commutation 32 reste alors en position d'ouverture, empêchant toute apparition d'un défaut sur le départ électrique 14 correspondant audit appareil de commutation 32.

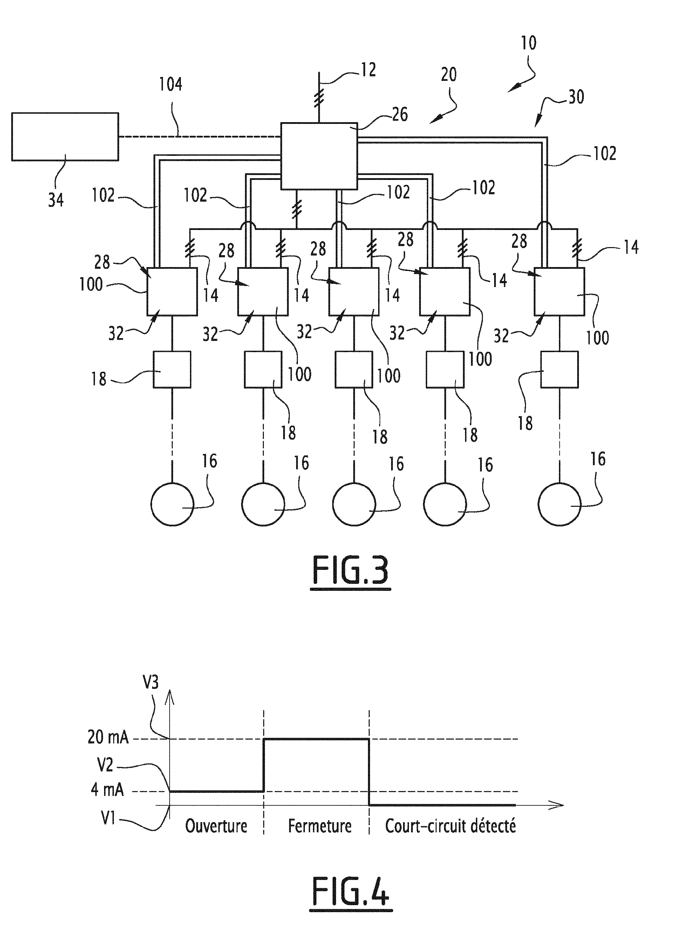

Les figures 3 et 4 illustrent un deuxième mode de réalisation de l'invention pour lequel les éléments analogues au premier mode de réalisation, décrit précédemment, sont repérés par des références identiques, et ne sont pas décrits à nouveau.

Selon le deuxième mode de réalisation, l'appareil de commutation 32 et l'organe de détection de courts-circuits 28 sont, pour chaque départ électrique 14, disposés dans un même boîtier de protection 100. L'organe de détection 28 est, par exemple, intégré dans l'appareil de commutation 32 correspondant.

Selon ce deuxième mode de réalisation, la liaison de données 30 est en forme d'une liaison en étoile, et comporte une pluralité de câbles de données 102, chaque organe de détection de courts-circuits 28 étant relié au disjoncteur principal 26 par un câble de données 102 correspondant.

La liaison de données 30 est propre à transmettre à la fois le signal de déclenchement à destination du disjoncteur principal 26 et le signal de commande à destination de l'appareil de commutation 32 concerné. Le système de protection 20 selon ce deuxième mode de réalisation ne comporte pas de liaison de commande spécifique reliant le dispositif de commande 34 aux appareils de commutation 32, les signaux de commande étant destinés à être transportés par la liaison de données 30.

Dans l'exemple de réalisation de la figure 3, chaque organe de détection 28 est intégré dans un appareil de commutation 32 correspondant, et chaque appareil de commutation 32 est directement relié au disjoncteur principal 26 via un câble de données 102 respectif.

Le dispositif de commande 34 est directement relié au disjoncteur principal 26 par une liaison auxiliaire 104, distincte des câbles de données 102.

Chaque câble de données 102 de la liaison de données 30 est propre à transmettre à la fois le signal de déclenchement à destination du disjoncteur principal 26 depuis l'organe de détection 28 correspondant, en cas de détection d'un défaut de court-circuit, et le signal de commande depuis le dispositif de commande 34 via le disjoncteur principal 26 et à destination de l'appareil de commutation 32 correspondant.

Le signal de déclenchement présente une première valeur V1 d'intensité du courant et le signal de commande présente une intensité de valeur variant entre une deuxième valeur V2 et une troisième valeur V3, comme représenté sur la figure 4.

La première valeur V1 est distincte de l'intervalle de valeurs comprises entre la deuxième valeur V2 et la troisième valeur V3, ce qui permet de distinguer le signal de déclenchement du signal de commande, ceux-ci étant tous deux susceptibles d'être transmis sur la liaison de données 30.

La première valeur d'intensité V1 est, par exemple, sensiblement nulle. Les deuxième et troisième valeurs V2, V3 sont, par exemple, respectivement égales à 4mA et 20mA.

Lorsqu'un court-circuit est détecté par un organe de détection 28 correspondant, le signal de déclenchement est transmis par ledit organe de détection 28 au disjoncteur principal 26 via la liaison de données 30, afin d'isoler électriquement l'installation 10.

Lorsque le dispositif de commande 34 envoie un signal de commande à destination d'un appareil de commutation 32 correspondant, le signal de commande est dans un premier temps envoyé au disjoncteur principal 26, et celui-ci est ensuite transmis audit appareil de commutation 32 via le câble de données 102 correspondant.

Le signal de commande présente des valeurs comprises entre la deuxième valeur V2 et la troisième valeur V3, et est distinct du signal de déclenchement présentant la première valeur V1, de sorte que la liaison de données 30 permet de transmettre à la fois le signal de déclenchement et le signal de commande.

Si un câble de données 102 est enlevé, aucune commande de fermeture ne sera transmise à l'appareil de commutation 32 correspondant et aucun défaut ne pourra alors apparaître dans le départ électrique 14 associé à l'appareil de commutation 32 correspondant, étant donné que chaque appareil de commutation 32 est par défaut en position d'ouverture.

En outre, si un câble de données 102 correspondant est enlevé, alors la suppression de ce câble de données sera équivalente à la transmission d'un signal de déclenchement, la première valeur V1 étant sensiblement nulle, ce qui entraînera le déclenchement du disjoncteur principal 26 et la mise en sécurité de l'installation électrique 10.

En outre, si l'un des câbles de données 102 est court-circuité, alors le signal de commande ne peut pas être transmis à l'appareil de commutation 32 correspondant et le départ électrique 14 correspondant reste alors ouvert en permanence.

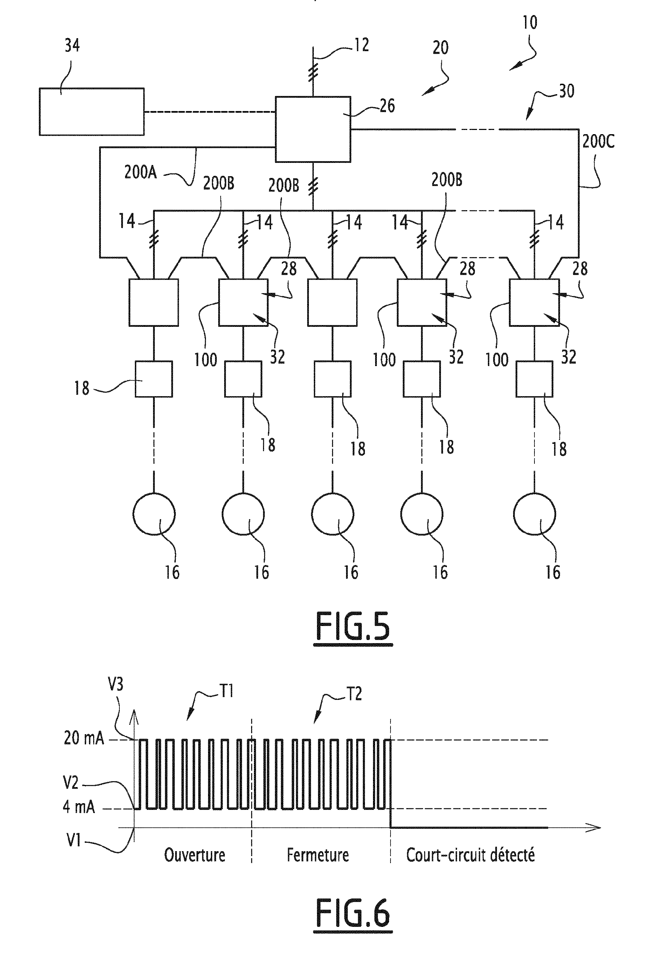

Les figures 5 et 6 illustrent un troisième mode de réalisation de l'invention pour lequel les éléments analogues aux premier et/ou deuxième modes de réalisation, décrits précédemment sont repérés par des références identiques, et ne sont pas décrits à nouveau.

Selon le troisième mode de réalisation, l'appareil de commutation 28 et l'organe de détection 32 sont, pour chaque départ électrique 14, disposés dans le même boîtier de protection 100.

La liaison de données 30 est en forme d'une liaison chaînée, et comporte une pluralité de câbles de données 200A, 200B, 200C, le disjoncteur principal 26 étant relié à un premier organe parmi les organes de détection 28 par un premier câble de données 200A, chaque organe de détection 28 étant relié à un organe de détection 28 suivant par un câble de données intermédiaire 200B et le dernier organe parmi les organes de détection 28 étant relié au disjoncteur principal 26 par un dernier câble de données 200C. Autrement dit, deux organes de détection 28 successifs sont reliés entre eux par un câble de données 200B correspondant, et les premier et dernier organes de détection 28 sont chacun reliés au disjoncteur principal 26 par un câble de données 200A, 200C correspondant.

Autrement dit, la liaison de données 30 forme un réseau de communication entre le disjoncteur principal 26 et la pluralité d'organes de détection 28.

De manière analogue au deuxième mode de réalisation, le signal de déclenchement présente la première valeur V1 et le signal de commande présente une intensité de valeur variant entre la deuxième valeur V2 et la troisième valeur V3, comme représenté sur la figure 6.

Le signal de commande correspondant à une ouverture de l'appareil de communication 32 est en forme d'une première trame T1, et le signal de commande correspondant à la fermeture de l'appareil de commutation 32 est en forme d'une deuxième trame T2. Les première et deuxième trames T1, T2 comportent chacune une succession de créneaux temporels, de valeurs comprises entre la deuxième valeur V2 et la troisième valeur V3.

Dans l'exemple de réalisation de la figure 6, la première valeur V1 est sensiblement nulle, ce qui permet alors de distinguer le signal de déclenchement du disjoncteur principal 26 du signal de commande de l'appareil de commutation 32.

Le fonctionnement de ce troisième mode de réalisation est par ailleurs analogue à celui du deuxième mode de réalisation décrit précédemment.

Les avantages de ce troisième mode de réalisation sont analogues à ceux des premiers et deuxièmes modes de réalisation.

On conçoit ainsi que le système de protection 20 selon l'invention permet d'offrir une meilleure protection des différents départs électriques 14 contre les courts-circuits.

## Revendications

1. Système (20) de protection d'une pluralité de départs électriques (14) contre des courts-circuits, le système de protection (20) comprenant un disjoncteur électrique (26) associé à une liaison électrique principale (12), la liaison électrique principale (12) étant connectée électriquement à chacun des départs électriques (14), le disjoncteur électrique (26) étant propre, en cas de réception d'un signal de déclenchement, à ouvrir la liaison électrique principale (12), les départs électriques (14) n'étant pas électriquement alimentés lorsque la liaison électrique principale (12) est ouverte, le système de protection comprend en outre une pluralité d'organes (28) de détection de courts-circuits, chaque organe de détection de courts-circuits (28) étant associé à un ou plusieurs départs électriques (14), **en ce que** les organes de détection (28) sont reliés au disjoncteur électrique (26) par une liaison de données (30) et propres à envoyer, via la liaison de données (30), le signal de déclenchement au disjoncteur électrique (26) en cas de détection d'un court-circuit, et
**en ce que** le système (20) comprend en outre un appareil de commutation électrique (32) pour chaque départ électrique (14), chaque appareil de commutation électrique (32) étant commandable dans une position parmi une position d'ouverture et une position de fermeture, la position d'ouverture correspondant à l'absence de circulation d'un courant électrique dans le départ électrique (14) respectif et la position de fermeture correspondant à la circulation du courant dans ledit départ (14), **caractérisé en ce que**
la liaison de données (30) étant propre à transmettre à la fois le signal de déclenchement à destination du disjoncteur électrique (26) et un signal de commande à destination de l'appareil de commutation (32).

2. Système (20) selon la revendication 1, dans lequel le nombre d'organes de détection de courts-circuits (28) est égal au nombre de départs électriques (14), chaque organe de détection de courts-circuits (28) étant associé à un départ électrique (14) respectif.

3. Système (20) selon la revendication 1 ou 2, dans lequel le signal de déclenchement présente une première valeur (V1) d'intensité du courant, et le signal de commande présente une intensité de valeur variant entre une deuxième valeur (V2) et une troisième valeur (V3), la première valeur d'intensité (V1) étant distincte de l'intervalle de valeurs comprises entre la deuxième valeur (V2) et la troisième valeur (V3).

4. Système (20) selon la revendication 3, dans lequel la première valeur d'intensité (V1) est sensiblement nulle.

5. Système (20) selon l'une quelconque des revendications précédentes, dans lequel, pour chaque départ électrique (14), l'appareil de commutation (32) et l'organe de détection (28) sont disposés dans un même boitier de protection (100).

6. Système (20) selon l'une quelconque des revendications précédentes, dans lequel la liaison de données (30) est propre à transmettre le signal de déclenchement à destination du disjoncteur (26) et le système (20) comprend en outre un dispositif (34) de commande des appareils de commutation (32), relié à chacun des appareils de commutation (32), et une liaison de commande (35) propre à transmettre un signal de commande à destination de l'appareil de commutation (32), la liaison de commande (35) étant distincte de la liaison de données (30) et reliant le dispositif de commande (34) à chaque appareil de commutation (32).

7. Système (20) selon l'une quelconque des revendications précédentes, dans lequel la liaison de données (30) est en forme d'une liaison chaînée, et comporte une pluralité de câbles de données (54A, 54B, 54C ; 200A, 200B, 200C), deux organes de détection successifs (28) étant reliés entre eux par un câble de données (54B ; 200B) correspondant et les premier et dernier organes de détection (28) étant chacun reliés au disjoncteur électrique par un câble de données (54A, 54C ; 200A, 200C) correspondant.

8. Système (20) selon l'une quelconque des revendications 1 à 6, dans lequel la liaison de données (30) est en forme d'une liaison en étoile, et comporte une pluralité de câbles de données (102), chaque organe de détection (28) étant relié au disjoncteur électrique (26) par un câble de données (102) correspondant.

9. Installation électrique (10) comprenant une pluralité de départs électriques (14), une liaison électrique principale (12) connectée électriquement à chacun des départs électriques (14), et un système (20) de protection de la pluralité de départs électriques (14) contre des courts-circuits,
**caractérisée en ce que** le système de protection contre les courts-circuits (20) est conforme à l'une quelconque des revendications précédentes, le disjoncteur électrique (26) étant connecté à la liaison électrique principale (12) et chaque organe de détection (28) étant connecté à un ou plusieurs départs électriques (14) correspondants.

10. Installation (10) selon la revendication 9, dans laquelle la liaison électrique principale (12) est une liaison triphasée et les départs électriques (14) sont des départs triphasés, la liaison électrique principale (12) et les départs électriques (14) comportant chacun trois conducteurs électriques (22, 24).

## Patentansprüche

1. Schutzsystem (20) für eine Vielzahl von elektrischen Ableitungen (14) gegen Kurzschlüsse, wobei das Schutzsystem (20) einen elektrischen Trennschalter (26) umfasst, der einer elektrischen Hauptverbindung (12) zugeordnet ist, wobei die elektrische Hauptverbindung (12) elektrisch mit jeder elektrischen Ableitung (14) verbunden ist, der elektrische Trennschalter (26) geeignet ist, im Falle des Empfangs eines Auslösesignals die elektrische Hauptverbindung (12) zu öffnen und die elektrischen Ableitungen (14) elektrisch nicht versorgt werden, wenn die elektrische Hauptverbindung (12) offen ist,
wobei das Schutzsystem außerdem eine Mehrzahl von Kurzschluss-Erfassungselementen (28) umfasst und jedes Kurzschluss-Erfassungselement (28) einer oder mehreren elektrischen Ableitungen (14) zugeordnet ist, wobei die Erfassungselemente (28) durch eine Datenverbindung (30) mit dem elektrischen Trennschalter (26) verbunden sind und geeignet sind, über die Datenverbindung (30) das Auslösesignal an den elektrischen Trennschalter im Falle des Detektierens eines Kurzschlusses zu senden und
wobei das System (20) außerdem für jede elektrische Ableitung (14) eine Schaltvorrichtung (32) umfasst und jede Schaltvorrichtung (32) in eine Stellung von einer Offenstellung und einer Schließstellung steuerbar ist, wobei die Offenstellung dem Fehlen eines elektrischen Stromflusses in der jeweiligen elektrischen Ableitung (14) entspricht und die Schließstellung dem Fließen des Stroms in der Ableitung (14) entspricht,
**dadurch gekennzeichnet, dass**
die Datenverbindung (30) geeignet ist, sowohl das Auslösesignal an den elektrischen Trennschalter (26) als auch ein Steuersignal an die Schaltvorrichtung (32) zu senden.

2. System (20) nach Anspruch 1, bei dem die Anzahl von Kurzschluss-Erfassungselementen (28) gleich der Anzahl der elektrischen Ableitungen (14) ist, wobei jedes Kurzschluss-Erfassungselement (28) einer jeweiligen elektrischen Ableitung (14) zugeordnet ist.

3. System (20) nach Anspruch 1 oder 2, bei dem das Auslösesignal einen ersten Stromstärkewert (V1) aufweist und das Steuersignal eine Stärke eines Wertes aufweist, der zwischen einem zweiten Wert (V2) und einem dritten Wert (V3) variiert, wobei der erste Stromstärkewert (V1) unterschiedlich zu dem Werteintervall ist, das zwischen dem zweiten Wert (V2) und dem dritten Wert (V3) liegt.

4. System (20) nach Anspruch 3, bei dem der erste Stromstärkewert (V1) im Wesentlichen null ist.

5. System (20) nach einem beliebigen der vorhergehenden Ansprüche, bei dem für jede elektrische Ableitung (14) die Schaltvorrichtung (32) und das Erfassungselement (28) in einem selben Schutzgehäuse (100) angeordnet sind.

6. System (20) nach einem beliebigen der vorhergehenden Ansprüche, bei dem die Datenverbindung (30) geeignet ist, das Auslösesignal an den Trennschalter (26) zu übertragen und das System (20) außerdem eine Vorrichtung (34) zum Steuern der Schaltvorrichtungen (32), die mit jeder der Schaltvorrichtungen (32) verbunden ist, und eine Steuerverbindung (35) umfasst, die geeignet ist, ein Steuersignal an die Schaltvorrichtung (32) zu übertragen, wobei die Steuerverbindung (35) sich von der Datenverbindung (30) unterscheidet und die Steuervorrichtung (34) mit jeder Schaltvorrichtung (32) verbindet.

7. System (20) nach einem beliebigen der vorhergehenden Ansprüche, bei dem die Datenverbindung (30) in Form einer Reihenverbindung ausgebildet ist und eine Mehrzahl von Datenleitungen (54A, 54B, 54C; 200A, 200B, 200C) aufweist, wobei zwei aufeinanderfolgende Erfassungselemente (28) durch eine entsprechende Datenleitung (548; 200B) untereinander verbunden sind und das erste und letzte Erfassungselement (28) jeweils mit dem elektrischen Trennschalter durch eine entsprechende Datenleitung (54A, 54C; 200A, 200C) verbunden sind.

8. System (20) nach einem beliebigen der Ansprüche 1 bis 6, bei dem die Datenverbindung (30) in Form einer Sternverbindung ausgebildet ist und eine Vielzahl von Datenleitungen (102) aufweist, wobei jedes Erfassungselement (28) an den elektrischen Trennschalter (26) durch eine entsprechende Datenleitung (102) angeschlossen ist.

9. Elektrische Anlage (10), eine Mehrzahl von elektrischen Ableitungen (14), eine elektrische Hauptverbindung (12), die elektrisch mit jeder der elektrischen Ableitungen (14) verbunden ist, und ein Schutzsystem (20) der Vielzahl von elektrischen Ableitungen (14) gegen Kurzschlüsse umfassend,
**dadurch gekennzeichnet, dass** das Schutzsystem (20) gegen Kurzschlüsse entsprechend einem beliebigen der vorhergehenden Ansprüche ausgebildet ist, wobei der elektrische Trennschalter (26) mit der elektrischen Hauptverbindung (12) verbunden ist und jedes Erfassungselement (28) mit einer oder mehreren entsprechenden elektrischen Ableitungen (14) verbunden ist.

10. Anlage (10) nach Anspruch 9, bei der die elektrische Hauptverbindung (12) eine Dreiphasenverbindung ist und die elektrischen Ableitungen (14) Dreiphasenableitungen sind, wobei die elektrische Hauptverbindung (12) und die elektrischen Ableitungen (14) jeweils drei elektrische Leitungen (22, 24) aufweisen.

## Claims

1. A protection system (20) for protecting a plurality of electric starting points (14) against short circuits, the protection system (20) comprising an electric circuit breaker (26) associated with a main electric link (12), the main electric link (12) being electrically connected to each of the electric starting points (14), the electric circuit breaker (26) being capable, upon receiving a triggering signal, of opening the main electric link (12), the electric starting points (14) not being electrically powered when the main electric link (12) is open,
the protection system (20) further comprises a plurality of members (28) for detecting short circuits, each member for detecting short circuits (28) being associated with one or several electric starting points (14), in that the detection members (28) are connected to the electric circuit breaker (26) through a data link (30) and capable of transmitting, via the data link (30), the triggering signal to the electric circuit breaker (26) in the case of detection of a short circuit, and
in that the protection system (20) further comprises an electric switching device (32) for each electric starting point (14), each electric switching device (32) being controllable in a position among an open position and a closed position, the open position corresponding to absence of an electric current flow in the respective electric starting point (14) and the closed position corresponding to a current flow in said starting point (14),
**characterized in that** the data link (30) being capable of transmitting both the triggering signal to the electric circuit breaker (26) and a control signal to the switching device (32).

2. The protection system (20) according to claim 1, wherein the number of members for detecting short circuits (28) is equal to the number of electric starting points (14), each member for detecting short circuits (28) being associated with a respective electric starting point (14).

3. The protection system (20) according to claim 1 or 2, wherein the triggering signal has a first current intensity value (V1) and the control signal has an intensity with a value varying between a second value (V2) and a third value (V3), the first intensity value (V1) being distinct from the range of values comprised between the second value (V2) and the third value (V3).

4. The protection system (20) according to claim 3, wherein the first intensity value (V1) is substantially equal to zero.

5. The protection system (20) according to any of the preceding claims, wherein, for each electric starting point (14), the switching device (32) and the detection member (28) are positioned in a same protective housing (100).

6. The protection system (20) according to any of the preceding claims, wherein the data link (30) is capable of transmitting the triggering signal to the circuit breaker (26) and the system (20) further comprises a control device (34) for controlling the switching devices (32), connected to each switching device (32), and a control link (35) capable of transmitting a control signal to the switching device (32), the control link (35) being distinct from the data link (30) and connecting the control device (34) to each switching device (32).

7. The protection system (20) according to any of the preceding claims, wherein the data link (30) has the form of a daisy chain link, and including a plurality of data cables (54A, 54B,54C; 200A, 200B, 220C), two successive detection members (28) being connected together through a corresponding data cable (54B; 200B) and the first and second detection members (28) each being connected to the electric circuit breaker through a corresponding data cable (54A, 54C; 200A, 200C).

8. The protection system (20) according to any of claims 1 to 6, wherein the data link (30) is a star-shaped link, and includes a plurality of data cables (102), each detection member (28) being connected to the electric circuit breaker (26) through a corresponding data cable (102).

9. An electric installation (10) comprising a plurality of electric starting points (14), a main electric link (12) electrically connected to each of the electric starting points (14), and a protection system (20) for protecting the plurality of electric starting points (14) against short circuits,
**characterized in that** the protection system (20) is according to any of the preceding claims, the electric circuit breaker (26) being connected to the main electric link (12) and each detection member (28) being connected to one or several corresponding electric starting points (14).

10. The installation (10) according to claim 9, wherein the main electric link (12) is a three-phase link and the electric starting points (14) are three-phase starting points, the main electric link (12) and the electric starting points (14) each including three electric conductors (22, 24).
